# EUROPEAN PATENT APPLICATION

(11) **EP 3 388 920 A1**
(43) Date of publication of application: **17.10.2018**
(21) Application number: 17305435.4
(22) Date of filing: 11.04.2017
(51) Int. Cl.: G06F 3/01, G01C 21/34, G06F 3/0481

(54) **METHOD AND DEVICE FOR GUIDING A USER TO A VIRTUAL OBJECT**

(71) Applicant: Thomson Licensing, 92130 Issy-les-Moulineaux (FR)
(72) Inventor: KELLER, Tony, 8048 Zürich (CH); DUBACH, Stefan, 8048 Zürich (CH)
(74) Representative: Amor, Rim

(57) **Abstract**

Method for guiding a user (U) equipped with a device to a virtual object (2) located at a first location (A), the device being connected to a display (6) on which the virtual object (2) is displayed, wherein the method includes:
- detecting a need to change a current path followed by the user (U) in order to reach the virtual object (2);
- moving the virtual object to a second location (B) chosen such that the virtual object remains displayed on the display (6);
- guiding the user to the second location (B).

## Description

### FIELD OF THE INVENTION

The present disclosure generally relates to the field of augmented reality.

More particularly, the disclosure deals with the guidance to a virtual object in the context of augmented reality.

Thus, the disclosure concerns a method for guiding a user to a virtual object and a corresponding guiding device. It further concerns a computer program implementing the guiding method of the disclosure.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Virtual Reality (VR) generally corresponds to a view of a complete replication of a real world while Augmented Reality (AR) corresponds to a view of a real-world image supplemented with virtual elements. In both VR and AR systems, a virtual object (VO) is a computer generated element that is displayed on a screen of a user's device.

In other terms, AR is a combination of VR and real world elements, i.e. VOs are placed in a real-world image. Usually, the user wears glasses or a helmet with an integrated display or simply uses a mobile display like a mobile phone or a tablet. The user stays in the real world and the augmentation is provided through the display. The augmentation can be dependent on the location of the user, defined for example by GPS coordinates and altitude and/or the viewing direction and angle and may also depend on time. The AR might also be influenced by other people around.

In a modern AR system, the virtual information, i.e. the VOs, can be text, pictures, graphics, video or sound or a haptic experience. A simple example is the display of the names of the peaks of a chain of mountains that the user is watching. A more sophisticated example is, while the user is walking down a street, a display of the houses of the street in the style of an earlier decade, for instance.

The information about location (coordinates and altitude), viewing direction, time and other people is derived from various sensors attached or connected to the device like GPS, local beacons, radio-detection, altimeter, microphone and photographic (camera chip and picture recognition), Infrared, position-sensors and more. Generally, the space around the user is periodically scanned, for example every 100ms to 10 seconds.

Typically, the information about the virtual objects is stored locally in the user's device or requested from a server. In this case, the virtual information that is overlaid for generating the AR is transmitted to the device when the user reaches the exact geographic location, also named geolocation, or when the user enters a space near that exact geolocation, for example 200m around the geolocation. The virtual information is then displayed when other criteria like time and viewing direction are fulfilled.

Recently, the first hype-game using AR named "Pokemon-Go" has been published. In order to play, the user is staring on a screen while moving in a real world. On the screen, the user can see the real world and some overlaid augmentation dealing with the game. In EP3157233, many tools were described in order to avoid any crash situation by monitoring and analyzing the user's device surrounding and signaling dangerous situations to the user.

For guidance to a point of interest or in AR games, VOs that are bound to a geographic location, known as geolocation, are often placed on the screen of a user's mobile device or head-mounted device. The user aims to reach this geolocation either by just being there, for example in the context of hunting geolocation games, or for getting an AR or VR presentation that is locked to this specific geolocation. This presentation can be a scenic view that is improved by naming special points in the scene or it can be a view of the location from a previous historical period or an advertisement in a virtual window in front of a shop, or price-tags, for example.

It can happen, sometimes, that these VOs cannot be reached in a direct line due to an obstacle. Then, the user must be guided around the obstacle. During this guiding process, the virtual information (i.e. the VO) might get lost from the screen when proposed turns are large.

Guidance of a user in a completely virtual environment while avoiding probable collisions has been described in the prior art, for instance in the document WO2015009887.

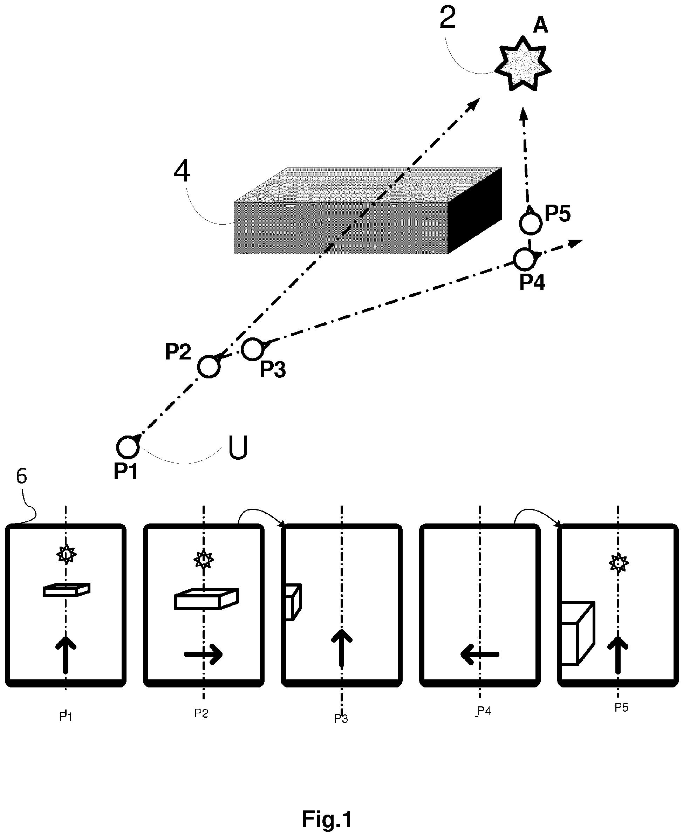

Figure 1 illustrates a prior art collision avoidance system in which a user U, equipped with a device such as a smart phone or a head-mounted device, is guided to a virtual object 2 around an obstacle 4. The upper part of Figure 1 shows the movement of the user towards the virtual object 2 while the lower part of Figure 1 shows a screen 6 of the user's device at each position of the user.

The user, initially located at a position P1 aims at the target VO 2 located at a location A. When the user arrives at a position P2, the system detects the necessity of changing the current path to location A in order to avoid a collision with the obstacle 4. The system then gives the user a visual, acoustical or haptic feedback for turning right. Then, at a position P3, the user is guided to go forward until he reaches a position P4 where he is instructed to turn left. Then, the user is instructed to go forward, at a position P5, until reaching the VO 2 at the location A.

Due to the skirting angle when turning right, the user loses the VO 2 from the screen in positions P3 and P4 and might therefore get confused. After the turn-left, the VO 2 is visible again on the screen.

Thus, the prior art collision avoidance system does not take into account the disappearance of the virtual object from the screen when guiding the user. This disappearance may disturb the user who then may feel an uncomfortable loss of orientation in the augmented world.

### SUMMARY OF THE INVENTION

The present disclosure proposes a solution for improving the situation.

Accordingly, the present disclosure provides a method for guiding a user equipped with a device to a virtual object located at a first location, the device being connected to a display on which the virtual object is displayed, wherein the method includes:
- detecting a need to change a current path followed by the user in order to reach the virtual object;
- moving the virtual object to a second location chosen such that the virtual object remains displayed on the display;
- guiding the user to the second location.

By relocating the virtual object to a second location when it is not desirable to reach the first location using a current path followed by the user and by ensuring that the virtual object is always displayed, the user quality of experience is improved. Indeed, the user never loses sight of the virtual object and feels more comfortable in the augmented world.

Advantageously, detecting a need to change the current path includes detecting an obstacle on the current path.

Thus, the method of the present disclosure is useful for collision avoidance with an obstacle when trying to reach a virtual object.

Alternatively, detecting a need to change the current path includes receiving a request from the user to change the current path.

This is useful for instance in cases where the user has vertigo in a critical situation or agoraphobia in a crowded place.

According to a first embodiment, the moving of the virtual object is done in steps.

This first embodiment is especially suitable when there is an important moving of the virtual object, such as for example a change of direction of more than 20 to 25 degrees.

According to a second embodiment, the moving of the virtual object is done gradually along a trajectory.

This second embodiment is especially suitable for a small movement of the virtual object, such as for example a change of direction less than 20 degrees.

Advantageously, the device includes a camera having a camera angle and the second location is chosen using the camera angle.

In other terms, the camera angle is used to evaluate the maximum range of displacement of the virtual object while keeping it visible on the display.

Advantageously, guiding the user includes instructing the user to deviate from the current path according to a direction.

For instance, instructions to the user may include "turn right", "turn left", "continue forward", etc. These instructions may be displayed on the display as a text or using arrows for instance. They may also be transmitted to the user orally using audio means of the device.

Alternatively, guiding the user includes instructing the user to follow an alternative path displayed on a map provided on the device.

According to an embodiment, the method includes moving the virtual object back to the first location.

Preferably, this moving back to the first location takes place when it is detected that the obstacle has been bypassed by the user.

This embodiment is interesting mainly in the case when the virtual object is bound to an absolute geolocation.

Advantageously, the method includes modifying a display of the virtual object at the second location.

This modification is useful to indicate to the user that the location of the displayed virtual object is temporary.

According to an embodiment, the method includes replacing the virtual object by an alternative virtual object located at the second location.

The disclosure also provides a device for guiding a user equipped with the guiding device to a virtual object located at a first location, the device being configured to be connected to a display on which the virtual object is displayed, wherein the device includes:
- a detection module configured to detect a need to change a current path followed by the user in order to reach the virtual object;
- a relocation module configured to move the virtual object to a second location chosen such that the virtual object remains displayed on the display;
- a guiding module configured to guide the user to the second location.

This device is for instance a smart phone or a tablet or a head-mounted device.

Advantageously, the display is a screen of the device.

Alternatively, the display is a screen of another apparatus connected to the device.

For example, the display is a screen of a head-mounted device connected to a smart phone implementing the user guidance of the present disclosure.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may include a storage medium such as a floppy disk, a CD-ROM, a hard disk drive, a magnetic tape device or a solid state memory device, a flash or optical memory, a cloud based storage and the like.

The disclosure thus provides a computer-readable program including computer-executable instructions to enable a computer to perform the guiding method of the present disclosure.

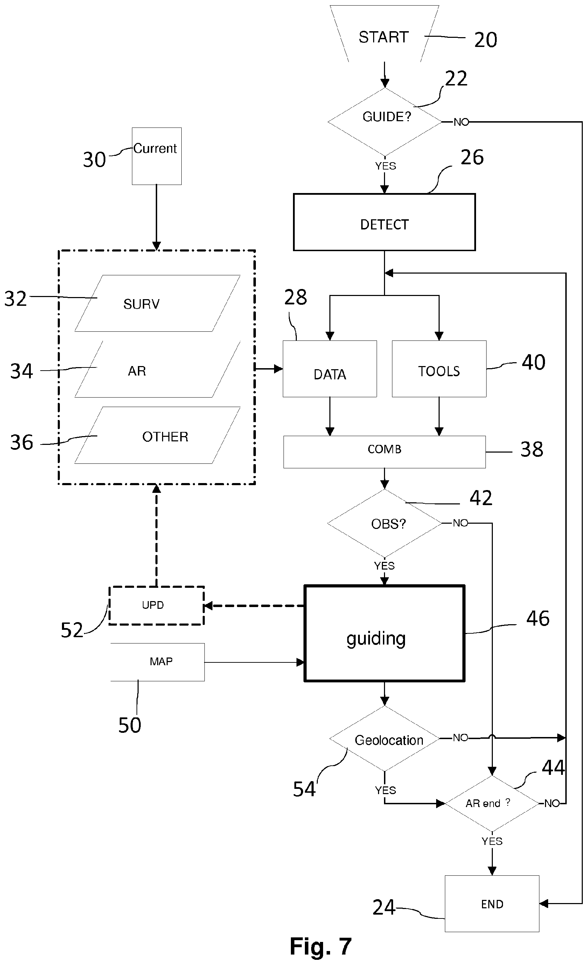

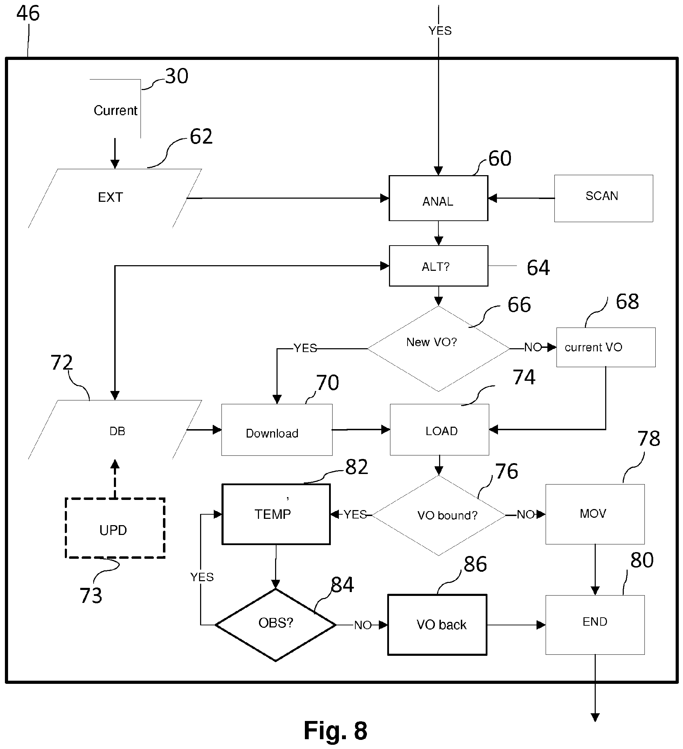

The diagrams of figures 7 and 8 illustrate an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view illustrating a collision avoidance system of the prior art;
- Figure 2 is a schematic view illustrating an example of a collision avoidance system according to an embodiment the present disclosure;
- Figure 3 shows an example of moving of a virtual object according to an embodiment of the present disclosure;
- Figure 4 shows an example of use of a map for guiding a user to a virtual object according to an embodiment of the present disclosure;
- Figure 5 shows an example of use of a map for guiding a user to a virtual object according to another embodiment of the present disclosure;
- Figure 6 shows an example of modification of a virtual object display when the virtual object is moved to a new location according to an embodiment of the present disclosure;
- Figure 7 is a flowchart showing the steps of the method for guiding a user according to an embodiment of the present disclosure;
- Figure 8 is a flowchart detailing the virtual object moving of the method for guiding a user according to an embodiment of the present disclosure; and
- Figure 9 is a schematic view illustrating a guiding device, according to an embodiment of the present disclosure.

### DETAILED DESCRIPTION OF PREFERRED EMBODIMENTS

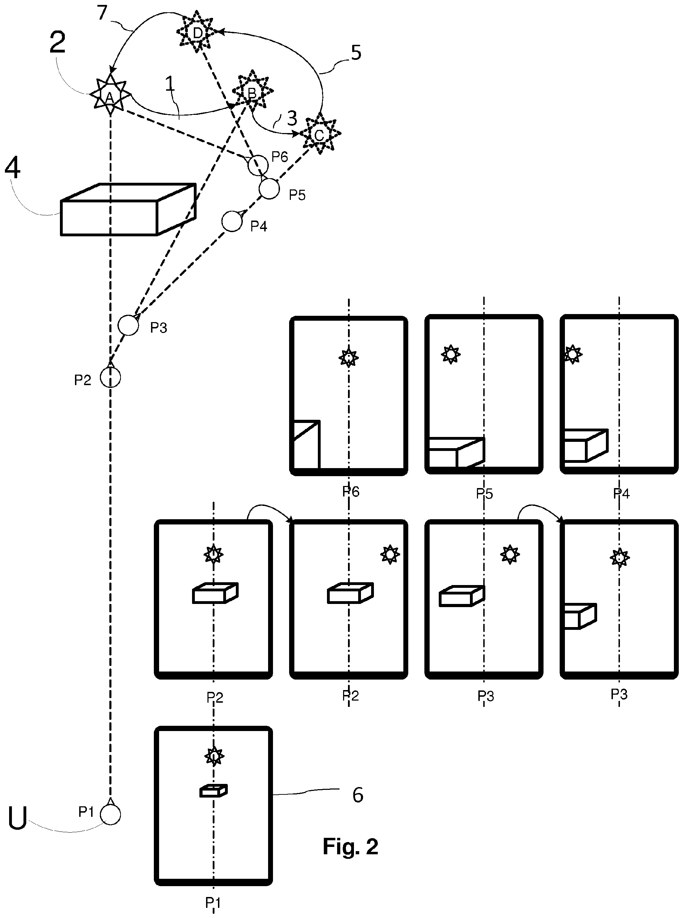

Figure 2 illustrates a collision avoiding situation according to an embodiment of the invention. This embodiment provides a guidance of a user U, equipped with a device such as a smart phone or a head-mounted device to a virtual object 2 around an obstacle 4. This guidance is preferably implemented by the user's device. The left part of Figure 2 shows the movement of the user towards the virtual object 2 while the right part of Figure 2 shows a screen 6 of the user's device at each position of the user.

The user, initially located at a position P1 aims at the target VO 2 located at a location A. When the user arrives at a position P2, the system detects the obstacle 4. In order to avoid a collision of the user with the obstacle 4 while guiding the user to the original geolocation A of the VO 2, the VO 2 is moved at 1 temporarily into a location B. The deviation of the VO 2 is limited by the condition of avoidance of the disappearance of the VO 2 from the screen in order to provide the user with more comfort and avoid the loss of orientation.

When the user arrives at a position P3, the obstacle 4 is still detected. Thus, the VO 2 is moved again at 3 to a new location C which is also selected such as the virtual object 2 is still displayed on the screen 6. The user heads towards the location C, passing a position P4, until it is detected, at a position P5, that the obstacle 4 has been bypassed. The VO 2 is then moved at 5 to a location D close to the original location A and determined so that the VO 2 is still visible on the screen 6. The user then moves to a position P6 where the VO 2 is relocated at 7 to its original location A. Then, the user can reach the VO 2 without colliding with the obstacle 4 and without losing sight of the VO 2.

The process of moving the VO 2 from A to B to C to D and then back to A can be performed in steps or gradually by using a trajectory.

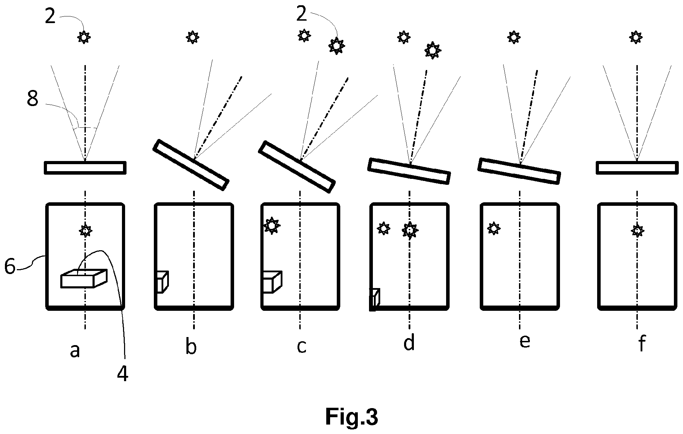

The selection of a new location for moving the virtual object 2 at least temporarily is performed through the use of a camera of the user's device and depends on the camera angle, as illustrated on Figure 3.

On figure 3, as shown in a, the user is going forward in order to reach the virtual object 2. In order to avoid the obstacle 4, and as it is shown in b, the user must turn more than half of the camera angle 8, then, according to an embodiment the present invention, and as shown in c, the VO 2 is moved to a new location that leads the user to a turn in the good direction while keeping the VO 2 displayed on the screen 6. The maximum shifting angle is advantageously given by the camera-angle of the device and by the distance from the VO to the user.

In order to show that the new location is not the original location, the VO is preferably displayed with a different attribute, i.e. a different color and/or a different size and/or a different transparency.

Then in d, the user follows a path leading to the new location of the virtual object. In e, it is detected that the obstacle 4 has been bypassed and the virtual object 2 is moved back to its original location. Then, in f, the user follows a path towards the virtual object 2 at its original location.

Advantageously, the transition from one temporary location to another location of the VO can also be related to obstacle or environmental information captured by at least one sensor connected to the device and/or to user behavior. For example, it is preferable to move the virtual object slowly if the user shows peradventure or reacts slowly on changes. Likewise, in crowded places, it is better to provide small movements of the virtual object in order to make the user perform soft turns so that collisions with other people are avoided. On the other hand, greater movements of the virtual object are preferred in a narrow environment which requests sharp turns.

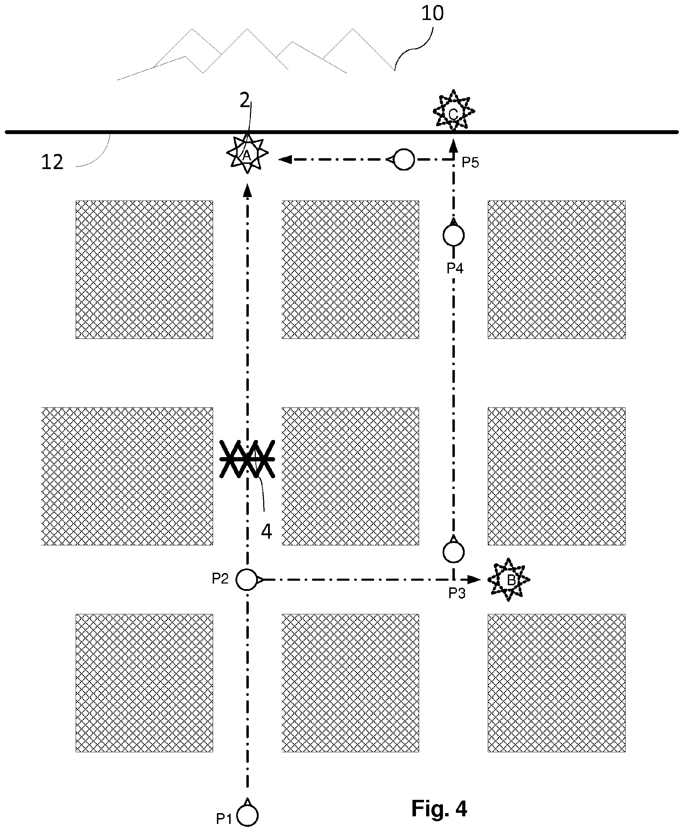

Figure 4 shows an example of use of a map for guiding a user to a virtual object according to an embodiment of the present disclosure. The map can be provided by an application installed in the user's device or from a map-server or from the user's device. Instead of selecting a deviation-angle for bypassing an obstacle, as explained above with reference to figures 3 and 4, an alternative route is selected on the map. The virtual object is continuously moved to help the user in following the route.

In the example illustrated in Figure 4, the virtual object 2 is located at a view point A of a chain of mountains 10. The location A is for example placed before a natural barrier 12.

The user is initially located at a position P1. The user follows follows the map until a position P2 where the user's device detects the presence of an obstacle 4. The device may also receive obstacle data from an internal or an external database. In order to guide the user, the virtual object 2 is moved to a location B and a path is selected in the map so that the user can reach the location B. The movement of the object from A to B is advantageously done in several small steps or gradually while the user is in the vicinity of P2 and later likewise in the vicinity of P3 in such a way that the VO is never lost from the screen.

When the user is at a position P3 close to B, the virtual object 2 is moved to the location C. Then the user follows a path to the location C and reaches positions P4 and P5. When the user reaches the position P5, the virtual object 2 is moved back to its original location A.

Advantageously, several possible paths on the map may be proposed to the user in order to bypass the obstacle 4. Thus, the user has the possibility to choose one of the proposed paths.

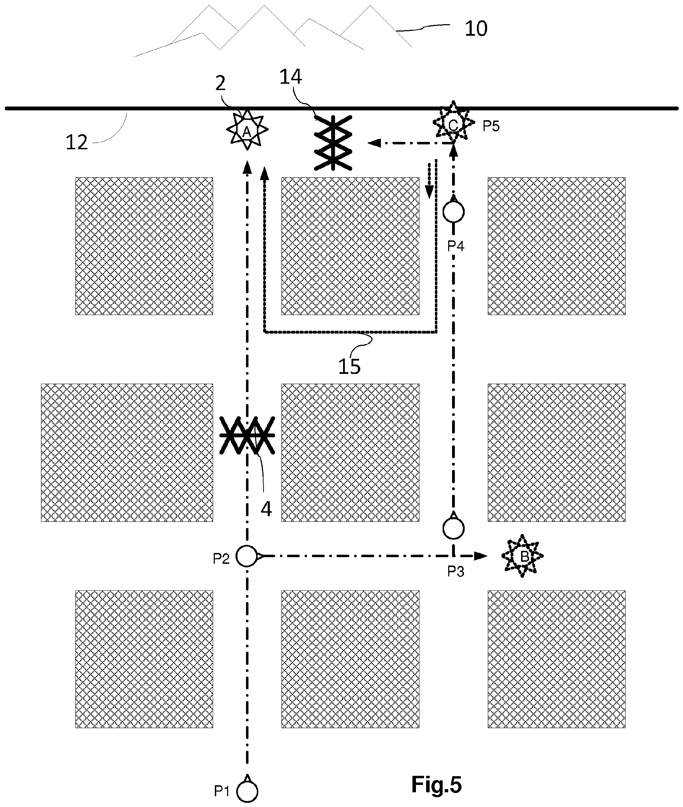

Figure 5 shows an example with two obstacles in the scenario of Figure 4.

In the example illustrated in Figure 5, the virtual object 2 is located at a view point A of a chain of mountains 10. The location A is for example placed before a natural barrier 12.

The user is initially located at a position P1. It follows the map until a position P2 where the user's device detects the presence of an obstacle 4. In order to guide the user, the virtual object 2 is moved to a location B and a path is selected in the map so that the user can reach the location B.

Then, when the user reaches a position P3, the virtual object 2 is moved to the location C and the user follows a path in the map to this location C. The user then reaches positions P4 and P5. When the user is at the position P5, an obstacle 14 is detected on the direct route between the location C and the original location A.

According to a first embodiment, the virtual object 2 is moved back to its original location A and a new path 15 bypassing the obstacle 14 is selected in the map in order to reach the location A.

According to a second embodiment, the location C of the virtual object constitutes an alternative view point of the chain of mountains 10. In this case, the virtual object 2 is not moved back to its original location A and remains in the location C, so that there's no need for the user to go to the location A.

In this case, however, the view of the chain of mountains at the point of view C is different from the view at the point of view A.

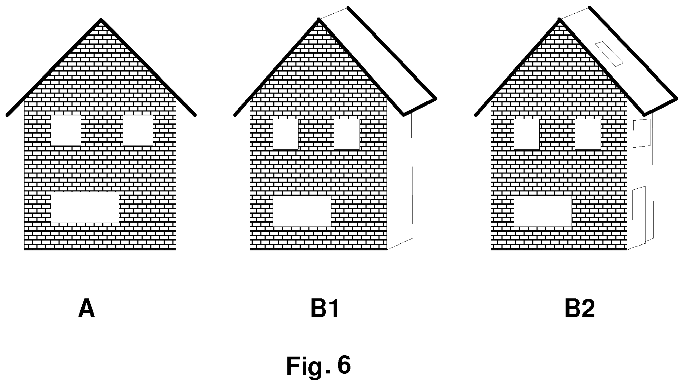

Figure 6 shows an example of modification of a virtual object which is in the form of a house when the virtual object is moved from its original location A to a location according to an embodiment of the invention. Alternatively to the modification of the current virtual object, a new virtual object can be searched in a database. This alternative virtual object has advantageously a view similar to the view of the original virtual from the new location.

At the original location A, the VO is displayed in the form of a house frontally. When the frontal location A cannot be reached, a new location B is selected aside. Then, the house is displayed from another angle and a 3D view is artificially created. The 3D view can be created without new elements as in B1 by giving the house a depth, or it can be created with new elements as in B2, by adding for instance a door and windows. A further possibility is to combine two views from two different viewpoints and transform the VO into a viewpoint located between the two different viewpoints.

Figures 7 and 8 are flowcharts detailing the steps of the method of guiding a user to a virtual object according to an embodiment of the present disclosure.

At step 20, the user starts the augmented reality program which is installed on the device. This may be for instance a game or any other AR application.

After the start of the AR, it is tested, at step 22, if the guiding of the user towards virtual objects is enabled.

If not, the process ends at 24.

If yes, the process moves to step 26 comprising reading user settings such as settings related to the guidance mode: whether using a direct view or a map, the UI mode: whether visual, acoustical or haptic, the audio information volume, the user's mobility, etc. and starting the detection of obstacles.

At step 28, the device loads obstacle data relative to the current geographic location 30 from external sources. These external sources comprise, for instance:
- an obstacle database 32 of a surveillance system provider, comprising for example location, dimension and type data of known obstacles reported by other users of a same or similar system. The obstacle database is updated whenever the system detects a fixed obstacle by sending the obstacle related data, i.e. location, size etc., to the database. When navigating, the database can provide information about obstacles not yet visible and allow an early bypassing strategy. Alternatively, the obstacle database is fed by geo-scanning tools or people entering data manually, etc. The obstacle data might be kept in a local memory for a certain time or for the time of staying in a given area. The keeping time might be related to the distance of a living location of the user;
- an obstacle database 34 of the AR provider, fed similarly to the database 32, which might be internal and/or external to the device;
- other databases 36 such as communal map data with locations of known objects, or emergency warning services announcing for instance unsafe routes, places for potential terror acts, crowded places, etc., traffic warning systems, e.g. TMC (Traffic Message Channel), or nearby devices announcing, e.g. by a broadcast via Bluetooth, an obstacle..

At step 38, the device combines the loaded data with built-in obstacle detection tools 40, e.g. optical or radar obstacle detection systems and exchanges with nearby devices using ad-hoc connections.

At step 42, it is tested if there is an obstacle or if a change of a current path is requested by the user for a personal reason.

If not, it is tested at step 44 if the augmented reality program ended. If the response is positive, the process ends. Otherwise, the process returns to step 28.

If an obstacle is detected or if there is a need to change the current path for any other reason, the user is guided at step 46 towards the virtual object according to the method and embodiments of the present disclosure. The details of this guiding will be described with reference to Figure 8.

This guiding 46 may use a MAP database 50.

The guiding 46 may be advantageously used to update, at step 52, the external sources 32, 34, 36.

After the guiding 46 is performed, it is tested at step 54 if the location of the desired virtual object has been reached. If yes, the process continues to step 44 otherwise the process return to step 28.

Referring now to Figure 8, this Figure details the guiding 46 of the user towards a virtual object when an obstacle is detected or when there's a need to change a current path towards the virtual object.

At step 60, an analysis of the obstacle, of the environment around and of the map is performed. This analysis 60 uses information about the current geolocation 30 provided by sources such as databases of the AR system provider and external databases and maps.

At step 64, it is checked, by a request to the AR provider, whether there is an alternative VO location available, either for the same VO or for a potential new VO. Then, it is tested at step 66, if there is an alternative VO and presenting an advantage over the original VO is available.

For instance, this step 66 comprises collecting metadata of available VOs and presenting them to the user. Metadata of VOs comprise parameters like geolocation, viewing direction, viewing angle (solid angle), content, short description, low resolution taster-view, rating.

If there's no such new VO available, the current VO is kept at step 68.

If a new VO is available and selected by the user, this new VO is downloaded and enabled at step 70. This download is made using the AR system provider and external VO databases 72 which are regularly updated at step 73.

After steps 68 or 70, the process moves to step 74.

At step 74, the attributes of the geolocation of the selected, i.e. either the current or the new, virtual object are loaded.

At step 76, it is tested if the virtual object is bound to an absolute geolocation, can be moved or replaced. The knowledge of being bound to an absolute geolocation or having an alternative is based on attributes given with the VO or the AR program or application. In case of unavailability of VO attributes, the system sticks to the user preferences.

If the VO is not bound to an absolute geolocation, the following process will be performed at step 78.
If the VO's absolute geolocation is immediately behind an obstacle, the virtual object is moved in front or aside of the obstacle and if existing, viewing directions, viewing angles and other attributes, like 3D attributes, are adjusted. In case of alternatives for positioning the virtual object, the user is preferably offered a choice.
If the VO's absolute geolocation is far behind an obstacle, the user is guided around the obstacle by temporary moving the virtual object to a new location as explained with reference to Figures 2 to 5, for instance. At this stage, the display of the virtual object may be modified as explained with reference to Figure 6. Then, when the user reaches the virtual object, the process 46 ends at step 80.
If the VO is bound to an absolute geolocation and behind an obstacle, the VO is temporary relocated at step 82 such that the user is guided on a desired alternative route to the original absolute geo-location, for example represented by the GPS coordinates, of the VO, as explained with reference to Figures 2 to 5. If at step 84, the obstacle is still detected, the process returns to step 82 otherwise the virtual object is relocated back to its original location at step 86. Then, the process 46 ends at step 80.

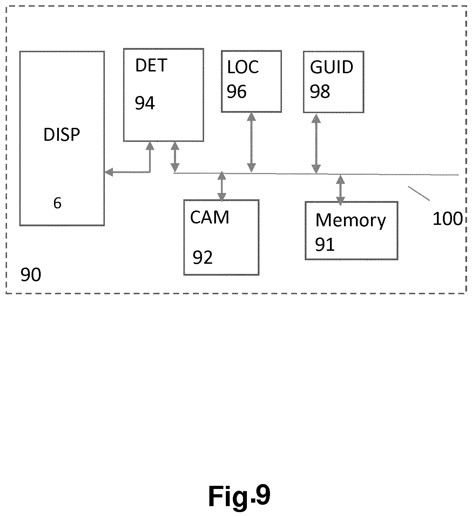

Figure 9 is a block diagram of an exemplary embodiment of a device 90 implementing the method of the present disclosure.

The device 90 is preferably a user's device such as a smartphone or a tablet or a head-mounted device used for VR and AR applications. Advantageously, the device 90 includes one or more processors, a memory 91, a network connectivity.

According to the represented embodiment of the device 90, this device includes a camera 92 and a display screen 6.

The device 90 includes a detection module 94 configured to detect a need to change a current path followed by the user in order to reach a virtual object;
The device 90 also includes a relocation module 96 configured to move the virtual object to a second location chosen such that the virtual object remains displayed on the screen 6. The camera angle of the camera 92 is advantageously used to determine the maximum displacement of the virtual object.

The device 90 further includes a guiding module 98 configured to guide the user to the second location.

According to the represented embodiment, a bus 100 provides a communications path between various elements of the device 90. Other point-to-point interconnection options (e.g. non-bus architecture) are also feasible.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.
Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For example, the user's device of this disclosure is not limited to a mobile phone, a tablet, a head-mounted device, etc. The invention could also be built into vehicles, for example in car navigation systems, and can also be adapted specifically for disabled persons.

## Claims

1. Method for guiding a user (U) equipped with a device (90) to a virtual object (2) located at a first location (A), the device (90) being connected to a display (6) on which the virtual object (2) is displayed, wherein the method includes:
- detecting (42) a need to change a current path followed by the user (U) in order to reach the virtual object (2);
- moving (78) the virtual object to a second location (B) chosen such that the virtual object remains displayed on the display (6);
- guiding the user to the second location (B).

2. Method of claim 1, wherein detecting (42) a need to change the current path includes detecting an obstacle on the current path.

3. Method of claim 1, wherein detecting (42) a need to change the current path includes receiving a request from the user (U) to change the current path.

4. Method of any one of claims 1 to 3, wherein the moving (78) of the virtual object (2) is done in steps.

5. Method of any one of claims 1 to 3, wherein the moving (78) of the virtual object (2) is done gradually along a trajectory.

6. Method of any one of claims 1 to 5, wherein the device (90) includes a camera (92) having a camera angle (8) and the second location (B) is chosen using the camera angle (8).

7. Method of any one of claims 1 to 6, wherein guiding the user (U) includes instructing the user to deviate from the current path according to a direction.

8. Method of any one of claims 1 to 6, wherein guiding the user (U) includes instructing the user (U) to follow an alternative path displayed on a map provided on the device (90).

9. Method of any one of claims 1 to 8, including moving the virtual object back (86) to the first location (A).

10. Method of any one of claims 1 to 9, including modifying a display of the virtual object (2) at the second location (B).

11. Method of any one of claims 1 to 10, including replacing the virtual object (2) by an alternative virtual object located at the second location.

12. Device (90) for guiding a user (U) equipped with the device (90) to a virtual object (2) located at a first location (A), the device (90) being configured to be connected to a display (6) on which the virtual object (2) is displayed, wherein the device (90) includes:
- a detection module (94) configured to detect a need to change a current path followed by the user (U) in order to reach the virtual object (2);
- a relocation module (96) configured to move the virtual object (2) to a second location (B) chosen such that the virtual object (2) remains displayed on the display (6);
- a guiding module (98) configured to guide the user (U) to the second location (B).

13. Device of claim 12, wherein the display (6) is a screen of the device (90).

14. Device of claim 12, wherein the display (6) is a screen of another apparatus connected to the device.

15. A computer-readable program including computer-executable instructions to enable a computer to perform the guiding method of any one of claims 1 to 11.
